# EUROPEAN PATENT SPECIFICATION

(11) **EP 2 191 185 B1**
(45) Date of publication and mention of the grant of the patent: **10.04.2013**
(21) Application number: 08806672.5
(22) Date of filing: 24.09.2008
(51) Int. Cl.: F16L 55/103

(54) **PIPE FREEZING**
ROHRGEFRIEREN
CONGÉLATION DE TUYAU

(30) Priority: 26.09.2007 GB 0718891
(43) Date of publication of application: 02.06.2010
(73) Proprietor: Plumbfreeze-Limited, Blackpool, Lancashire FY3 9XG (GB)
(72) Inventor: MAGRATH, John Christopher, Blackpool, Lancashire FY3 7SG (GB)
(74) Representative: Fearnside, Andrew Simon
(86) International application number: PCT/GB2008/050856
(87) International publication number: WO 2009/040576

(56) References cited:
- WO-A-03/021165
- GB-A- 2 206 940
- US-A- 4 922 721
- US-A- 5 101 848
- US-A1- 2003 145 605
- US-A1- 2007 033 951
- US-B1- 6 880 346

## Description

### Field of the Invention

The present invention relates to pipe freezing, in particular but not exclusively to water pipe freezing.

### Background to the Invention

Methods and apparatus for isolating a section of pipe to make repairs are described in GB 2 206 940. By freezing fluid in a pipe it is possible to isolate a section of the pipe, for example to effect repairs to the pipe.

WO 03/021165 describes a cooling device comprising at least one Peltier element thermally coupled to a fluid circuit for cooling the fluid. The fluid circuit comprises sections running at an angle of lees than ninety degrees to the direction of the force of gravity and contains fluid with a high thermal expansion coefficient. The region of thermal coupling is located at the highest point of the fluid circuit. Circulation of the fluid is achieved exclusively as a result of density changes thereof, and no additional pump is required.

### Summary of the Invention

In a first aspect, the present invention provides an electrically operated piece of pipe freezing equipment according to claim 1.

Suitably, the sold state cooling devices comprise Peltier heat pump devices.

Suitably, the dispersal unit comprises a forced air radiator. Suitably, a fluid medium pump is provided to to circulate the fluid medium. Suitably, the fluid medium comprises a mixture of glycol and water.

Suitably, the coolant chiller is located away from the freezing head. Suitably, the coolant chiller comprises a Peltier heat pump device and/or a vapour phase refrigerator.

Suitably, the electrically operated piece of equipment comprises a heat removal tank containing fluid medium, the heat removal tank in direct physical contact with the solid state cooling devices.

Suitably, the electrically operated piece of equipment comprises a freezing head including pivotally connected jaw portions arrangeable in use to clamp around a portion of a pipe to be frozen. Suitably, the jaw portions pivot about point, and are biased towards one another. Suitably, the jaw portions are biased by a spring. Suitably, the jaw portions are coupled to handles. Suitably, the electrically operated piece of equipment comprises blocks located in the freezing head. Suitably the blocks are located in the jaw portions.

Suitably the blocks in use contact the pipe to be frozen, providing a heat conduction path from the pipe to the solid state devices. The blocks suitably comprise complementary portions of a cylindrical bore, said bore for receiving the pipe in use. The electrically operated equipment is suitably provided in a set with a range of interchangeable blocks having different sized bores, to allow the equipment to be used with pipes of a range of sizes.

Suitably, the electrically operated piece of equipment further comprises protection shims that between the solid state cooling devices and a portion of the freezing head that in use contacts a pipe to be frozen.

Suitably, the electrically operated piece of equipment, further comprises a sealing gasket in the freezing head, the sealing gasket used to cover and seal a leak in a pipe to be frozen in cases when the equipment used to freeze a portion of a pipe that has a leak.

Suitably, the electrically operated piece of equipment further comprises one or more temperature sensors in the freezing head. Suitably, temperature information from the sensors is arranged to trigger an indicator confirming a sufficiently low predetermined temperature level has been reached. Suitably, temperature information from the sensors is arranged to trigger an indicator confirming that water within the pipe is sufficiently frozen to allow the pipe to be safely uncoupled or cut, according to predetermined control logic relating sensed temperature to time. Suitably, temperature information from the sensors is arranged to trigger an indicator confirming the sensed temperature has been held at a sufficiently low predetermined level for a predetermined time period.

Suitably, the electrically operated piece of equipment is further arranged to thaw a frozen pipe by using the solid state devices to supply heat to the pipe. Suitably, the electrically operated piece of equipment comprises a switching circuit for controlling a change from freezing to thawing, such that a cooling supply voltage to the solid state cooling devices is gradually reduced before the polarity is reversed to commence a heating operation.

According to the present invention there is provided an apparatus as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 shows an electrically operated piece of equipment suitable for freezing fluid in a pipe, according to an example embodiment of the present invention;
Figure 2 shows the freezing head portion of the equipment shown in Figure 1;
Figure 3 is a schematic illustration of the coolant fluid medium system of the equipment shown in Figure 1; and

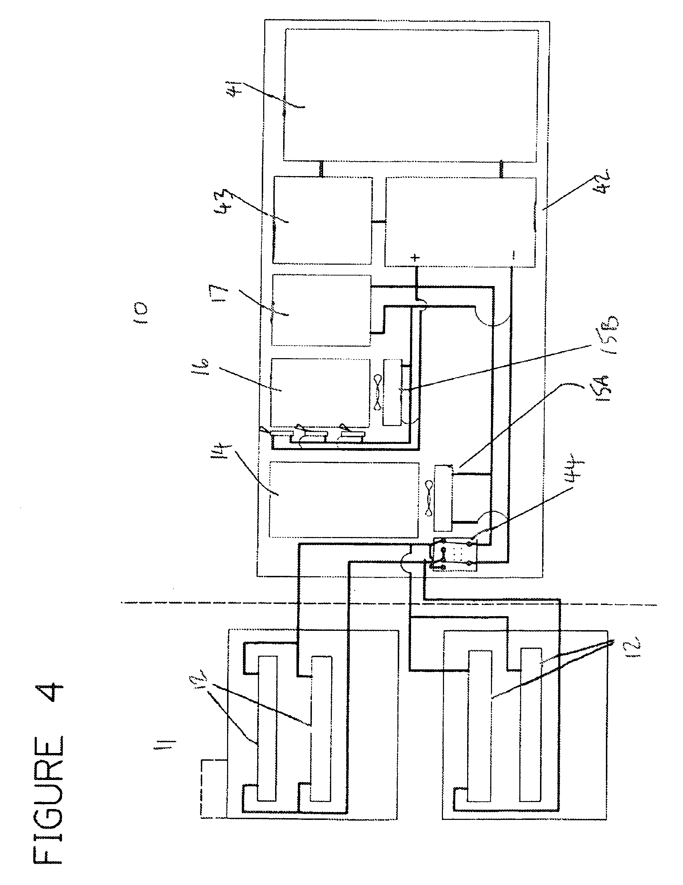

Figure 4 is a schematic illustration of the electrical system of the equipment shown in Figure 1.

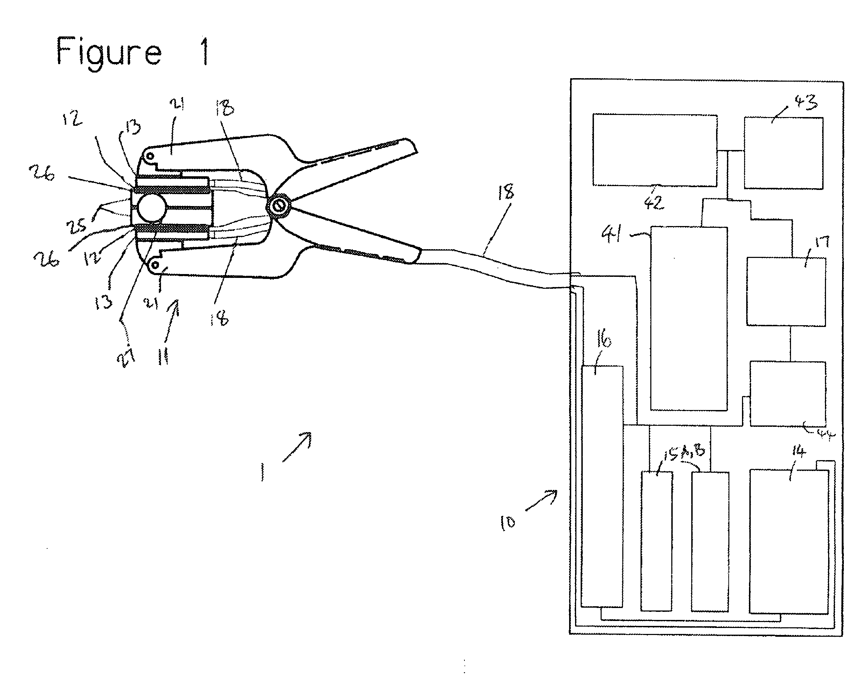

Referring now to Figure 1 there is shown an electrically operated piece of equipment 1 suitable for freezing fluid in a pipe, according to an example embodiment of the present invention. The fluid is suitably a liquid, in particular water. The equipment 1 comprises a freezing head 11 and a main body 10. The freezing head 11 indudes solid state cooling devices - in this example Peltier heat pump devices 12 fitted in the freezing head 11. The Peltier heat pump devices 12 comprise thin wafers of semiconductor material, with one side of a p-n junction in the wafer cooled and the side other heated when an electrical potential is provided across the junction. The Peltier heat pump devices 12 may comprise multi-layered devices comprising more than one p-n junction in a stacked arrangement.

The amount of cooling provided by a Peltier heat pump device is dependent on the amount of heat which is removed from the hot side of the device. In use, heat is removed from the hot side of the Peltier heat pump devices 12 using a coolant fluid medium circulated to and within heat removal tanks 13. Each of the heat removal tanks 13 is in direct physical contact with one of the Peltier heat pump devices 12 to ensure effective thermal conduction there-between. The fluid medium is circulated to the heat removal tanks 13 as part of a closed circulatory loop.

When the equipment 1 is switched on, the Peltier heat pump devices 12 are energised and cooling begins. In the embodiment of Figure 1, a 12 volt direct current is for example supplied to the Peltier heat pump devices 12. Heat is removed from the hot side of the Peltier heat pump devices 12 by passing into the heat removal tanks 13. The heat removal tanks 13 are filled with fluid medium that is in use pumped round a circuit from the freezing head 11 to a heat dispersal unit in the form of a forced air radiator 14. A fluid medium pump 17 is provided to circulate the fluid medium, and a flexible hose 18 is provided coupling the heat removal tanks 13 to the pump and other components of the main body 10. The forced air radiator 14 is provided with at least one electrically operated fan 15A to cool the radiator 14, thereby dispersing heat from the fluid medium to the atmosphere. In this example embodiment the fluid medium comprises a mixture of glycol and water.

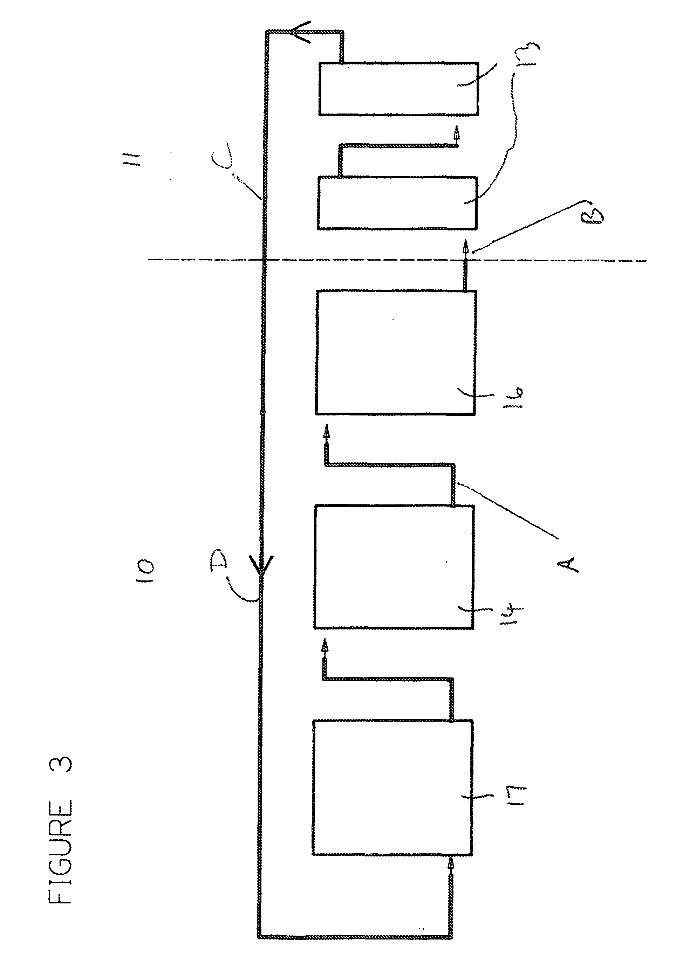

The fluid medium passes from the radiator into a coolant chiller 16. The coolant chiller 16 is provided to lower the temperature of the fluid medium below the ambient temperature in which the forced air radiator 14 operates. On exiting the coolant chiller 16, the fluid medium passes to the heat removal tanks 13 to absorb heat from the hot sides of the Peltier heat pump devices 12. The use of a coolant chiller 16 reduces the cooling load on the Peltier heat pump devices 12, which are therefore better able to achieve freezing temperatures when the ambient temperature is relatively high. In this way the freezing head 11 is easily able to freeze water in pipes by achieving Peltier heat pump device cold temperatures of well below zero degrees Celsius, e.g. minus five degrees Celsius when the ambient temperature is for example 30 degrees Celsius or higher. The coolant chiller 16 may be provided using a vapour cycle refrigerator, or a further Peltier heat pump device may be used in addition or as an alternative to a vapour cycle refrigerator. The coolant chiller 16 suitably includes a fan 15B to aid heat dispersal. Figure 3 shows a schematic illustration of the coolant system of the equipment shown in Figure 1. At point A the temperature of the fluid medium is close to the ambient air temperature. At point B the temperature of the fluid medium is below the ambient air temperature. At point C heat has been removed from the Peltier heat pump devices 12 and at point D warm fluid medium is returned from the freezing head 11 to the fluid medium pump 17.

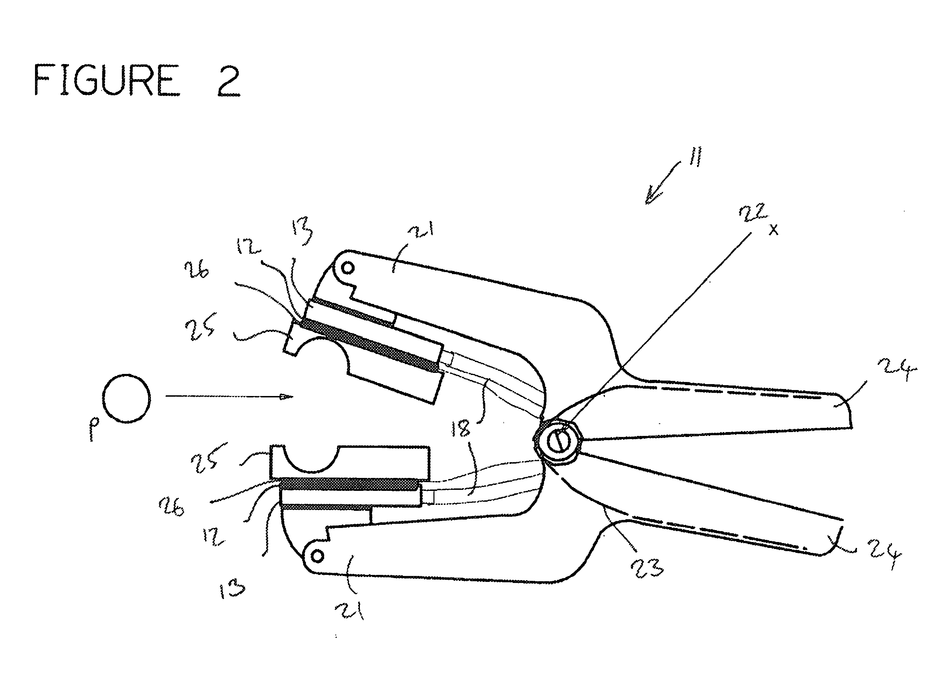

Referring now to Figure 2 there is shown the freezing head 11, including pivotally connected jaw portions 21 that in use clamp around a portion of a pipe P to be frozen. The jaw portions pivot about point 22, and are biased towards one another by a spring 23. The jaw portions 21 are coupled to handles 24 that when brought together by hand pressure applied by a user separate the jaw portions 21 against the bias of the spring 23. With the jaw portions 21 opened the freezing head 11 is placed around the pipe P to be frozen. When hand pressure is released the freezing head 11 is held firmly around the pipe P.

The jaw portions 21 each carry one of the Peltier heat pump devices 12. The jaw portions 21 each include a Peltier protection shim 26. The Peltier protection shims 26 are provided to form a physical protective layer to protect the Peltier heat pump devices 12 from damage caused by knocks, impact etc. The Peltier protection shims 26 are suitably of high thermal conductivity, and lie between the Peltier heat pump devices 12 and the portions of the freezing head 11 that in use contact the pipe P, i.e. between the Peltier heat pump devices 12 and blocks 25 located in the jaw portions 21.

The blocks 25 are metallic and in use contact the pipe P to be frozen, providing a heat conduction path from the pipe P to the Peltier heat pump devices 12 via the Peltier protection shims 26. The blocks 25 suitably comprise complementary portions of a cylindrical bore, said bore for receiving the pipe P in use. The equipment 1 is suitably provided in a set with a range of interchangeable blocks 25 having different sized bores, to allow the equipment to be used with pipes of a range of sizes. Typically domestic pipes are supplied with outer diameters of 8mm, 10mm, 15mm and 22mm, so corresponding blocks 25 are supplied.

One of both of the blocks 25 in use may comprise a sealing gasket 27, suitably of a rubber material. The sealing gasket 27 is suitably provided at an end portion of a block 25, and is used to cover and seal a leak in the pipe P in cases when the equipment 1 is to be used to freeze a portion of a pipe that has a leak. The sealing gasket prevents the pipe from leaking while freezing takes place.

One or more temperature sensors may be provided in the freezing head 11. For example, thermistors may be provided in each jaw portion 21. The temperature sensors are coupled to circuitry in the main body 10. The temperature information from the sensors is used to trigger an indicator confirming that water within the pipe P is sufficiently frozen to allow the pipe to be safely uncoupled or cut. In one embodiment the indicator is triggered when the sensed temperature has reached a sufficiently low predetermined level. In another embodiment the indicator is triggered when the sensed temperature has been held at a sufficiently low predetermined level for a predetermined time period. For example, holding the temperature of at the jaw portions 21 at minus five degrees Celsius has been found to freeze water in a standard 15mm copper pipe after a period of approximately 6 minutes. Narrower 8-10mm copper pipes are typically frozen after being held at minus five degrees Celsius for 4 minutes, whereas wider 22mm copper pipes are typically frozen after being held at minus five degrees for approximately 9 minutes. The indicator is arranged to generate a sound and/or to provide a visual indication.

To thaw a frozen pipe the polarity of the voltage supplied to the Peltier heat pump devices 12 is reversed. Typically, the cooling supply voltage is gradually reduced before the polarity is reversed. In this embodiment with a 12V cooling voltage, a heating voltage of 5V is suitably applied to the Peltier heat pump devices 12. A switching circuit 44 for controlling the change over from freezing to thawing is provided.

The embodiments shown are provided with a power supply 41 for providing a 13.8V voltage to the electrical components of the main unit. The power supply 41 is a transformer to step down a mains supply voltage input to equipment 1. The equipment 1 also comprises a battery 42. The battery 42 is rechargeable, and draws power from the power supply 41 via a charging circuit 43 when the equipment 1 is coupled to a mains electrical supply. The battery 42 allows the equipment 1 to function without being connected to a mains electrical supply, which is useful if no mains supply is available or if the equipment 1 is to be used in wet conditions where an electrical shock risk would be posed by use of a mains supply.

The embodiments described herein offer convenient freezing of pipes, that is, solidification of a fluid medium, especially a liquid medium contained within a pipe. The example embodiments of equipment as described are portable, safe and easy to use, and can be operated successfully in relatively high ambient temperatures.

## Claims

1. An electrically operated piece of pipe freezing equipment (1), comprising:
a freezing head (11) including solid state cooling devices (12), and
a fluid medium arranged in use to carry heat from the solid state cooling devices (12) for dispersal of heat at a heat dispersal unit located away from the freezing head (11),
the freezing head (11) including pivotally connected separate jaw portions (21) arranged in use to clamp around a portion of a pipe to be frozen, thereby the freezing head (11) being arranged to offer freezing of a pipe, that is, solidification of the fluid medium contained within a pipe,
**characterised in that**
the fluid medium is located in a closed circulatory loop for subsequent return to the freezing head (11) from the heat dispersal unit, and
the pipe freezing equipment (1) further comprises a coolant chiller (16) which is provided to lower the temperature of the fluid medium below the ambient temperature in which the heat dispersal unit operates, and
each of the separate jaw portions (21) carry a respective one of two said solid state cooling devices (12).

2. The electrically operated piece of pipe freezing equipment (1) of claim 1, where in the dispersal unit comprises a forced air radiator (14).

3. The electrically operated piece of pipe freezing equipment (1) of claim 1 or 2, comprising fluid medium pump (17) to circulate the fluid medium.

4. The electrically operated piece of pipe freezing equipment (1) of any preceding claim, wherein the coolant chiller (16) is located away from the freezing head (11).

5. The electrically operated piece of pipe freezing equipment (1) of any preceding claim, wherein the coolant chiller (16) comprises a Peltier heat pump device.

6. The electrically operated piece of pipe freezing equipment (1) of any preceding claim comprising a heat removal tank (13) containing said fluid medium, the heat removal tank (13) in direct physical contact with the solid state cooling devices.

7. The electrically operated piece of pipe freezing equipment (1) of any preceding claim, further comprising protection shims that lay between the solid state cooling devices and a portion of the freezing head (11) that in use contacts a pipe to be frozen.

8. The electrically operated piece of pipe freezing equipment (1) of any preceding claim, further comprising a sealing gasket in the freezing head (11), the sealing gasket (27) used to cover and seal a leak in a pipe to be frozen in cases when the equipment used to freeze a portion of a pipe that has a leak.

9. The electrically operated piece of pipe freezing equipment (1) of any preceding claim, further comprising one or more temperature sensors in the freezing head (11).

10. The electrically operated piece of pipe freezing equipment (1) of claim 9, wherein temperature information from the sensors is arranged to trigger an indicator confirming a sufficiently low predetermined temperature level has been reached.

11. The electrically operated piece of pipe freezing equipment (1) of claim 9 or 10, wherein temperature information from the sensors is arranged to trigger an indicator confirming that water within the pipe is sufficiently frozen to allow the pipe to be safely uncoupled or cut, according to predetermined control logic relating sensed temperature to time.

12. The electrically operated piece of pipe freezing equipment (1) of claim 10 or 11, wherein temperature information from the sensors is arranged to trigger an indicator confirming the sensed temperature has been held at a sufficiently low predetermined level for a predetermined time period.

13. The electrically operated piece of pipe freezing equipment (1) of any preceding claim, arranged to thaw a frozen pipe by using the solid state device to supply heat to the pipe.

14. The electrically operated piece of pipe freezing equipment (1) of claim 13, comprising a switching circuit (44) for controlling a change from freezing to thawing, such that a cooling supply voltage to the solid state cooling devices is gradually reduced before the polarity is reversed to commence a heating operation.

## Patentansprüche

1. Elektrisch betriebenes Teil der Rohrgefriereinrichtung (1), umfassend:
einen Gefrierkopf (11), der Festkörper-Gefriervorrichtungen (12) umfasst, und
ein fluides Medium, das beim Einsatz zum Transportieren von Wärme von den Festkörper-Gefriervorrichtungen (12) zum Verteilen von Wärme in einer Wärmeverteileinheit ausgelegt ist, die sich entfernt vom Gefrierkopf (11) befindet,
wobei der Gefrierkopf (11) drehbar verbundene separate Backenteile (21) umfasst, die beim Einsatz zum Umklammern eines Teils eines Rohres ausgelegt sind, welcher gefroren werden soll, wobei der Gefrierkopf (11) dafür ausgelegt ist, das Gefrieren eines Rohres zu ermöglichen, das heißt, das fluide Medium, das im Rohr enthalten ist, zum Erstarren zu bringen,
**dadurch gekennzeichnet, dass**
das fluide Medium sich in einer geschlossenen Umwälzschleife zum anschließenden Rücklauf zum Gefrierkopf (11) aus der Wärmeverteileinheit befindet, und
die Rohrgefriereinrichtung (1) ferner einen Kühlmittelkühler (16) umfasst, der zum Absenken der Temperatur des fluiden Mediums unter die Umgebungstemperatur vorgesehen ist, in dem die Wärmeverteileinheit arbeitet, und
jeder der getrennten Backenteile (21) jeweils einen von zwei Festkörper-Kühlvorrichtungen (12) trägt.

2. Elektrisch betriebenes Teil der Rohrgefriereinrichtung (1) nach Anspruch 1, wobei die Verteileinheit einen zwangsbelüfteten Radiator (14) umfasst.

3. Elektrisch betriebenes Teil der Rohrgefriereinrichtung (1) nach Anspruch 1 oder 2, der Folgendes umfasst:
Fluidmediumpumpe (17) zum Umwälzen des fluiden Mediums.

4. Elektrisch betriebenes Teil der Rohrgefriereinrichtung (1) nach einem der vorherigen Ansprüche,
wobei der Kühlmittelkühler (16) sich fern vom Gefrierkopf (11) befindet.

5. Elektrisch betriebenes Teil der Rohrgefriereinrichtung (1) nach einem der vorherigen Ansprüche,
wobei der Kühlmittelkühler (16) eine Peltier-Wärmepumpenvorrichtung umfasst.

6. Elektrisch betriebenes Teil der Rohrgefriereinrichtung (1) nach einem der vorherigen Ansprüche, das Folgendes umfasst:
einen Wärmeableitungstank (13), der das fluide Medium enthält, wobei der Wärmeableitungstank (13) sich in direktem physischem Kontakt mit den Festkörper-Kühlvorrichtungen befindet.

7. Elektrisch betriebenes Teil der Rohrgefriereinrichtung (1) nach einem der vorherigen Ansprüche,
das ferner Schutzbeilagescheiben umfasst, die zwischen den Festkörper-Kühlvorrichtungen und einem Teil des Gefrierkopfes (11) liegen, der beim Einsatz ein Rohr kontaktiert, welches gefroren werden soll.

8. Elektrisch betriebenes Teil der Rohrgefriereinrichtung (1) nach einem der vorherigen Ansprüche,
das ferner eine Dichtung im Gefrierkopf (11) umfasst, wobei die Dichtung (27) zum Abdecken und Abdichten eines Lecks in einem Rohr verwendet wird, das einzufrieren ist, wenn die Einrichtung zum Gefrieren eines Teils eines Rohres, das ein Leck hat, eingesetzt wird.

9. Elektrisch betriebenes Teil der Rohrgefriereinrichtung (1) nach einem der vorherigen Ansprüche,
das ferner einen oder mehrere Temperatursensoren im Gefrierkopf (11) umfasst.

10. Elektrisch betriebenes Teil der Rohrgefriereinrichtung (1) nach Anspruch 9, wobei
Temperaturinformationen von den Sensoren dafür ausgelegt sind, einen Indikator auszulösen, der bestätigt, dass ein ausreichend niedriges vorgegebenes Temperaturniveau erreicht worden ist.

11. Elektrisch betriebenes Teil der Rohrgefriereinrichtung (1) nach Anspruch 9 oder 10, wobei
Temperaturinformationen von den Sensoren dafür ausgelegt sind, einen Indikator auszulösen, der bestätigt, dass das Wasser im Rohr ausreichend gefroren ist, um zu ermöglichen, dass das Rohr sicher herausgenommen oder -geschnitten wird, nach einer vorgegebenen Steuerlogik, die die erfasste Temperatur in Beziehung zur Zeit setzt.

12. Elektrisch betriebenes Teil der Rohrgefriereinrichtung (1) nach Anspruch 10 oder 11, wobei
Temperaturinformationen von den Sensoren dafür ausgelegt sind, einen Indikator auszulösen, der bestätigt, dass die erfasste Temperatur über einen vorgegebenen Zeitraum auf einem ausreichend niedrigen vorgegebenen Niveau gehalten wurde.

13. Elektrisch betriebenes Teil der Rohrgefriereinrichtung (1) nach einem der vorherigen Ansprüche,
das zum Auftauen eines gefrorenen Rohres unter Verwendung der Festkörpervorrichtung zur Zufuhr von Wärme zum Rohr ausgelegt ist.

14. Elektrisch betriebenes Teil der Rohrgefriereinrichtung (1) nach Anspruch 13,
das einen Schaltkreis (44) zum Steuern einer Änderung vom Gefrieren zum Auftauen derart umfasst, dass eine Kühlungsversorgungsspannung zu den Festkörper-Kühlvorrichtungen allmählich reduziert wird, bevor die Polarität umgekehrt wird, um einen Heizbetrieb zu starten.

## Revendications

1. Élément à commande électrique de matériel de congélation de tuyau (1), comprenant :
une tête de congélation (11) comportant des dispositifs de refroidissement à semi-conducteurs (12), et
un milieu fluide agencé en cours d'utilisation de façon à transporter la chaleur provenant des dispositifs à semi-conducteurs (12) pour la dissipation de la chaleur au niveau d'une unité de dissipation de la chaleur située à l'écart de la tête de congélation (11),
la tête de congélation (11) comportant des parties mâchoires séparées rattachées de manière pivotante (21) agencées en cours d'utilisation de façon à se serrer autour d'une partie d'un tuyau à congeler, la tête de congélation (11) étant ainsi agencée de façon à offrir la congélation d'un tuyau, c'est-à-dire la solidification du milieu fluide contenu à l'intérieur d'un tuyau,
**caractérisé en ce que**
le milieu fluide est situé dans une boucle de circulation fermée pour le retour ultérieur à la tête de congélation (11) depuis l'unité de dissipation de la chaleur, et
le matériel de congélation de tuyau (1) comprend en outre un refroidisseur de fluide de refroidissement (16) qui est prévu pour abaisser la température du milieu fluide en dessous de la température ambiante dans laquelle l'unité de dissipation de la chaleur fonctionne, et
chacune des parties mâchoires séparées (21) porte un dispositif respectif desdits deux dispositifs à semi-conducteurs (12).

2. Élément à commande électrique de matériel de congélation de tuyau (1) selon la revendication 1, dans lequel l'unité de dissipation de la chaleur comprend un radiateur à air forcé (14).

3. Élément à commande électrique de matériel de congélation de tuyau (1) selon la revendication 1 ou 2, comprenant une pompe à milieu fluide (17) pour faire circuler le milieu fluide.

4. Élément à commande électrique de matériel de congélation de tuyau (1) selon l'une quelconque des revendications précédentes, dans lequel le refroidisseur de fluide de refroidissement (16) est situé à distance de la tête de congélation (11).

5. Élément à commande électrique de matériel de congélation de tuyau (1) selon l'une quelconque des revendications précédentes, dans lequel le refroidisseur de fluide de refroidissement (16) comprend un dispositif à pompe à chaleur Peltier.

6. Élément à commande électrique de matériel de congélation de tuyau (1) selon l'une quelconque des revendications précédentes, comprenant un réservoir d'évacuation de la chaleur (13) contenant ledit milieu fluide, ce réservoir d'évacuation de la chaleur (13) étant en contact physique direct avec les dispositifs de refroidissement à semi-conducteurs.

7. Élément à commande électrique de matériel de congélation de tuyau (1) selon l'une quelconque des revendications précédentes, comprenant en outre des cales de protection qui sont situées entre les dispositifs de refroidissement à semi-conducteurs et une partie de la tête de congélation (11) qui, en cours d'utilisation, entre en contact avec un tuyau à congeler.

8. Élément à commande électrique de matériel de congélation de tuyau (1) selon l'une quelconque des revendications précédentes, comprenant en outre une garniture d'étanchéité dans la tête de congélation (11), cette garniture d'étanchéité (27) étant utilisée pour couvrir et obturer une fuite dans un tuyau à congeler dans les cas où le matériel est utilisé pour congeler une partie d'une tuyau qui a une fuite.

9. Élément à commande électrique de matériel de congélation de tuyau (1) selon l'une quelconque des revendications précédentes, comprenant en outre un ou plusieurs capteurs de température dans la tête de congélation (11).

10. Élément à commande électrique de matériel de congélation de tuyau (1) selon la revendication 9, dans lequel les informations sur la température provenant des capteurs sont agencées de façon à déclencher un indicateur confirmant qu'un niveau de température prédéterminé suffisamment bas a été atteint.

11. Élément à commande électrique de matériel de congélation de tuyau (1) selon la revendication 9 ou 10, dans lequel les informations sur la température provenant des capteurs sont agencées de façon à déclencher un indicateur confirmant que l'eau à l'intérieur du tuyau est suffisamment congelée pour permettre au tuyau d'être détaché ou coupé en toute sécurité, selon une logique de commande prédéterminée établissant un rapport entre la température détectée et le temps.

12. Élément à commande électrique de matériel de congélation de tuyau (1) selon la revendication 10 ou 11, dans lequel les informations sur la température provenant des capteurs sont agencées de façon à déclencher un indicateur confirmant que la température détectée a été maintenue à un niveau prédéterminé suffisamment bas pendant une période de temps prédéterminée.

13. Élément à commande électrique de matériel de congélation de tuyau (1) selon l'une quelconque des revendications précédentes, agencé de façon à dégeler un tuyau congelé en utilisant un dispositif à semi-conducteurs pour alimenter de la chaleur au tuyau.

14. Élément à commande électrique de matériel de congélation de tuyau (1) selon la revendication 13, comprenant un circuit de commutation (44) pour commander un changement de la congélation au dégel, de manière à ce qu'une tension d'alimentation de refroidissement appliquée sur les dispositifs de refroidissement à semi-conducteurs soit réduite progressivement avant que la polarité ne soit inversée pour commencer une opération de chauffage.
